# FASCICULE DE BREVET EUROPEEN

(11) **EP 2 296 809 B1**
(45) Date de publication et mention de la délivrance du brevet: **31.10.2012**
(21) Numéro de dépôt: 09757689.6
(22) Date de dépôt: 20.05.2009
(51) Int. Cl.: B01J 21/04, B01J 23/46, B01J 23/656, B01J 23/889, B01J 23/89, C10G 35/09, B01J 27/053, B01J 37/02, B01J 37/03, B01J 27/045, B01J 32/00, B01J 23/42, B01J 37/00, B01J 37/06

(54) **PREPARATION DE SUPPORTS SOUFRES POUR LE REFORMAGE CATALYTIQUE**
HERSTELLUNG VON TRÄGERN AUF SCHWEFELBASIS FÜR KATALYTISCHE REFORMIERUNG
PREPARATION OF SULFUR-BASED SUPPORTS FOR CATALYTIC REFORMING

(30) Priorité: 06.06.2008 FR 0803176
(43) Date de publication de la demande: 23.03.2011
(73) Titulaire: IFP Energies nouvelles, 92852 Rueil-Malmaison Cedex (FR)
(72) Inventeur: OUDART Yohan, 93500 PANTIN (FR); LACOMBE Sylvie, F - 69390 Vernaison (FR); CAUFFRIEZ Hervé, F - 69390 Charly (FR); LE GOFF Pierre-Yves, 75011 PARIS (FR); REVEL Renaud, F- 3820 Serpaize (FR)
(86) Numéro de dépôt international: PCT/FR2009/000605
(87) Numéro de publication internationale: WO 2009/147313

(56) Documents cités:
- EP-A- 0 113 796
- EP-A- 0 252 605
- FR-A- 2 563 120
- GB-A- 1 269 764
- US-A- 4 179 408
- US-A- 5 562 817

## Description

Les catalyseurs de reformage des essences et/ou de production d'aromatiques sont des catalyseurs bifonctionnels, c'est-à-dire qu'ils sont constitués de deux phases, une métallique et une acide, qui ont un rôle bien défini dans l'activité du catalyseur. La fonction métallique assure la déshydrogénation des naphtènes et des paraffines et l'hydrogénation des précurseurs de coke. La fonction acide assure l'isomérisation des naphtènes et des paraffines et la cyclisation des paraffines. La fonction acide est apportée par le support lui-même, le plus souvent une alumine halogénée. La fonction métallique est assurée généralement par un métal noble de la famille du platine et au moins un métal promoteur, principalement l'étain pour le procédé continu, et le rhénium dans le procédé semi-régénératif. Les phases métalliques et acides peuvent être promues par différents dopants.

Généralement, le support des catalyseurs utilisés est de l'alumine gamma. Le support est généralement sous forme de billes ou d'extrudé selon le procédé. Il est généralement fabriqué à partir d'un gel de boehmite. Lorsque ce gel est calciné à une certaine température, il se transforme en alumine gamma. La boehmite peut avoir des compositions variées. Elle comprend principalement de l'aluminium et comprend aussi des impuretés en quantités variables.

La plupart des gels de boehmite utilisés en reforming sont de haute pureté. Le gel de boehmite est donc par conséquent fortement lavé afin d'enlever certaines impuretés comme le soufre et le sodium ou peut être, de haute pureté par défaut, en fonction du procédé mis en oeuvre.

Dans le cas des catalyseurs contenant une fonction métallique fortement hydrogénolysante, tel que par exemple le rhénium ou l'iridium, du soufre est ajouté sur le catalyseur après dépôt des métaux, par exemple à la fin de l'étape de réduction, ou bien avant ou pendant l'injection de la charge hydrocarbonée à convertir, ceci dans le but de calmer la très forte fonction hydrogénolysante du ou des métaux.

La présente demande propose une méthode de préparation de support comprenant du soufre, ce support étant utilisé pour préparer des catalyseurs de reformage, de préférence en lit fixe. Ce support peut être synthétisé à partir de sulfate d'aluminium et d'aluminate de sodium. La phase métallique comprend au moins un métal du groupe VIII, de préférence le platine, et au moins un promoteur sélectionné dans le groupe constitué par le rhénium et l'iridium. De préférence, le promoteur est au moins le rhénium. Les catalyseurs peuvent éventuellement contenir au moins un dopant.

Le catalyseur selon l'invention n'a pas besoin d'être sulfuré avant test, comme en témoigne la faible activité hydrogénolysante en début de test. L'étape de sulfuration du catalyseur est ainsi supprimée, ce qui apporte un gain économique.

Le support préparé selon l'invention comprend en général en outre plus de 100 ppm de sodium. Dans les brevets de l'art antérieur, le sodium est généralement éliminé du support par un fort lavage du gel. Selon la présente invention, le sodium est échangé lors de l'étape d'imprégnation des métaux et sa teneur finale est strictement inférieure à 50 ppm poids. Les étapes de lavage sont ainsi diminuées ce qui apporte un gain économique.

Il a été observé que les catalyseurs selon l'invention présentent une amélioration des performances catalytiques initiales par rapport aux catalyseurs de l'art antérieur obtenus à partir d'un gel d'alumine pur et sulfuré en fin de préparation ou avant injection de la charge à convertir.

### ART ANTÉRIEUR

Le brevet US 5562817 décrit la préparation d'un catalyseur de reformage sur un support produit par la réaction entre notamment le sulfate d'aluminium et l'hydroxyde ou le carbonate d'aluminium. Les catalyseurs platine/rhénium sont sulfurés par du sulfure d'hydrogène avant d'être utilisés. Notre invention se distingue principalement par le fait qu'il n'est pas nécessaire de sulfurer le catalyseur au cours d'une étape spécifique.

Le brevet GB 607256 décrit l'utilisation d'un catalyseur supporté possédant des propriétés déshydrogénantes. Ce catalyseur est obtenu en mélangeant à chaud un oxyde métallique ayant des propriétés déshydrogénantes avec du sulfate d'aluminium hydraté. Le soufre est ensuite totalement enlevé par un traitement thermique réducteur. La méthode de préparation du catalyseur selon l'invention ne comprend pas de traitement thermique réducteur pour enlever le soufre. Ce traitement thermique est coûteux à la fois en énergie et en matière première.

Le brevet GB 1269764 décrit la préparation d'un catalyseur de reformage sur un support produit par la réaction entre du chloride d'aluminium et de fhydroxide d'aluminium. Les catalyseurs platine/rhénium sont sulfurés avant d'être utilisés.

### DESCRIPTION SOMMAIRE DE L'INVENTION

L'invention concerne un procédé de préparation d'un catalyseur comprenant au moins un métal du groupe VIII, du rhénium ou de l'iridium et un support soufré, ledit catalyseur présentant une teneur en sodium strictement inférieure à 50 ppm poids et une teneur en soufre comprise entre 1500 et 3000 ppm poids. L'invention concerne aussi la mise en oeuvre de ce catalyseur dans la réaction de reformage catalytique.

### DESCRIPTION DÉTAILLÉE DE L'INVENTION

L'invention concerne un procédé de préparation d'un catalyseur comprenant au moins un métal du groupe VIII, de préférence le platine, du rhénium ou de l'iridium, de préférence du rhénium, un support soufré, et éventuellement au moins un dopant choisi dans le groupe formé par le gallium, le germanium, l'indium, l'étain, l'antimoine, le thallium, le plomb, le bismuth, le titane, le chrome, le manganèse, le molybdène, le tungstène, le rhodium, le zinc et le phosphore, ledit catalyseur présentant à l'issue de l'étape d) une teneur en sodium strictement inférieure à 50 ppm poids, de préférence strictement inférieure à 40 ppm poids et une teneur en soufre comprise entre 1500 et 3000 ppm poids, de préférence entre 1550 et 2900 ppm poids, de manière très préférée entre 1600 et 2500 ppm poids.

Le procédé comprend les étapes a), b), c) et d) détaillées ci-dessous:
- une étape a) de préparation du support soufré comprenant les sous-étapes suivantes :
   a1) ajout simultané d'une solution aqueuse de sulfate d'aluminium à une solution aqueuse basique d'aluminate de sodium de manière à précipiter le précurseur de l'alumine et former une bouillie, le pH étant maintenu entre 6 et 10, préférentiellement entre 8 et 10 ; la vitesse d'addition des deux solutions est maintenue pour former un précurseur d'alumine intermédiaire sous forme de boehmite-pseudoboehmite.
   a2) vieillissement de la bouillie obtenue à l'issue de l'étape a1) à des températures comprises entre 60 et 250°C, de préférence comprises entre 60°C et 170°C pendant une durée allant de 0 à 24h, de préférence 10 min à 3h. Le pH pendant cette étape est ajusté entre 8,5 et 10, de préférence entre 9 et 9,5.
   a3) filtration de la bouillie pour obtenir un gâteau de filtration qui est lavé jusqu'à obtenir une teneur en poids de soufre comprise entre 1500 et 3000 ppm rapportée à l'alumine calcinée.
   a4) séchage entre 40 et 150°C, de manière préférée entre 70°C et 120°C, du gâteau de filtration obtenu à l'issue de a3/
   a5) mise en forme du gâteau séché de manière à obtenir le support soufré puis calcination entre 500°C et 830°C, de manière préférée entre 550°C et 750°C.
- une étape b) de mise en contact du support soufré avec une solution aqueuse ou organique d'au moins un précurseur de métal du groupe VIII,
- une étape c) de mise en contact du support obtenu à l'issue de l'étape b) avec une solution aqueuse ou organique d'au moins un précurseur du rhénium ou de l'iridium
- une étape d) de séchage du support obtenu à l'issue de l'étape c) à une température comprise entre 80 et 150°C, puis de calcination sous air à une température comprise entre 300 et 600°C, puis de réduction sous hydrogène.

Le support peut être obtenu par mise en forme du gâteau séché par toute technique connue de l'homme du métier. La mise en forme peut être réalisée par exemple par extrusion, par pastillage, par la méthode de la coagulation en goutte (oil-drop), par granulation au plateau tournant ou par toute autre méthode bien connue de l'homme du métier.

La surface spécifique est ajustée soit en utilisant l'étape de calcination et/ou l'étape de vieillissement à une valeur comprise entre 150 et 400 m²/g, de préférence entre 150 et 300 m²/g, de manière encore plus préférée entre 160 et 230 m²/g.

Dans une technique selon l'invention le support est soumis à une imprégnation à l'aide d'une solution aqueuse ou organique d'au moins un précurseur du rhénium ou de l'iridium, le volume de la solution étant de préférence égal au volume de rétention du support ou en excès par rapport à ce volume. Le solide et la solution d'imprégnation sont laissés en contact pendant plusieurs heures. Le solide est ensuite lavé et filtré.

Le solide obtenu est ensuite imprégné à l'aide d'une solution aqueuse ou organique d'au moins un précurseur du ou des dopants choisis, le volume de la solution étant de préférence égal au volume de rétention du support ou en excès par rapport à ce volume. Le solide et la solution d'imprégnation sont à nouveau laissés en contact pendant plusieurs heures. Le solide est ensuite lavé et filtré.

Le solide obtenu est ensuite imprégné par une solution aqueuse ou organique d'au moins un précurseur de métal du groupe VIII, le volume de la solution étant de préférence égal au volume de rétention du support ou en excès par rapport à ce volume. Après quelques heures de mise en contact, le produit obtenu est séché à une température comprise entre 80 et 150°C, puis calciné sous air entre 300 et 600°C, de préférence en effectuant un balayage d'air pendant plusieurs heures.

L'ordre des étapes d'imprégnation du promoteur, du dopant et du métal noble peut être inversé. Lesdites étapes peuvent être menées dans quelque ordre que ce soit. Des étapes de lavage peuvent éventuellement être menées avant chaque nouvelle étape d'imprégnation. Au moins une étape d'imprégnation doit être conduite avec un volume de solution d'imprégnation en excès par rapport au volume de rétention du support.

Les solutions d'imprégnation peuvent éventuellement contenir un ou des acides en faible concentration, tels que l'acide nitrique, carbonique, sulfurique, citrique, formique, oxalique, de façon à améliorer la distribution du ou des métaux nobles et / ou du ou des promoteurs.

L'introduction du ou des dopants peut également être réalisée lors de la synthèse de l'alumine ou lors de la mise en forme du catalyseur. Ainsi, l'introduction d'au moins un dopant sélectionné dans le groupe constitué par le gallium, le germanium, l'indium, l'étain, l'antimoine, le thallium, le plomb, le bismuth, le titane, le chrome, le manganèse, le molybdène, le tungstène, le rhodium, le zinc et le phosphore peut être réalisée lors de l'étape a1) ou lors de l'étape a5.

Dans le cas où le métal noble est le platine, les précurseurs de platine font partie du groupe suivant, sans que cette liste soit limitative: acide hexachloroplatinique, acide bromoplatinique, chloroplatinate d'ammonium, chlorures de platine, dichlorocarbonyl dichlorure de platine, chlorure de platine tétraamine. Des complexes organiques de platine, tels que le diacétylacétonate de platine (II), peuvent être également mis en oeuvre. De préférence le précurseur utilisé est l'acide hexachloroplatinique.

Dans le cas du dopant, des précurseurs de types nitrates, halogénures ou organométalliques peuvent être utilisés, sans que cette liste soit limitative.

Dans le cas où le rhénium est utilisé comme promoteur, des précurseurs tels que l'acide perrhénique et le perrhénate d'ammonium ou de potassium peuvent être utilisés, sans que cette liste soit limitative.

Lorsque les divers précurseurs utilisés dans la préparation du catalyseur selon l'invention ne contiennent pas d'halogène ou contiennent de l'halogène en quantité insuffisante, il peut être nécessaire d'ajouter un composé halogéné lors de la préparation. Tout composé connu de l'homme de métier peut être utilisé et incorporé à l'une quelconque des étapes de préparation du catalyseur selon l'invention. En particulier, il est possible d'utiliser des composés organiques tels que des halogénures de méthyle ou d'éthyle, par exemple du dichlorométhane, du chloroforme, du dichloroéthane, du méthylchloroforme ou du tétrachlorure de carbone.

L'halogène peut également être ajouté au moyen d'une imprégnation par une solution aqueuse de l'acide correspondant, par exemple l'acide chlorhydrique, à tout moment de la préparation. Un protocole typique consiste à imprégner le solide de façon à introduire la quantité d'halogène souhaitée. Le catalyseur est maintenu en contact avec la solution aqueuse pendant une durée suffisamment longue pour déposer cette quantité d'halogène.

Le chlore peut également être ajouté au catalyseur selon l'invention au moyen d'un traitement d'oxychloration. Un tel traitement peut par exemple être effectué entre 350 et 550°C pendant plusieurs heures sous un débit d'air contenant la quantité de chlore souhaitée et contenant éventuellement de l'eau.

Avant utilisation le catalyseur est soumis à un traitement sous hydrogène afin d'obtenir une phase métallique active. La procédure de ce traitement consiste par exemple en une montée lente de la température sous courant d'hydrogène jusqu'à la température maximale de réduction, comprise par exemple entre 100 et 600°C, et de préférence entre 200 et 580°C, suivie d'un maintien par exemple durant 30 minutes à 6 heures à cette température. Cette réduction peut être effectuée aussitôt après la calcination, ou plus tard chez l'utilisateur. Il est aussi possible de réduire directement le produit séché chez l'utilisateur.

Le support du catalyseur selon l'invention présente une surface spécifique comprise entre 150 et 400 m²/g, de préférence entre 150 et 300 m²/g, de manière encore plus préférée entre 160 et 230 m²/g.

La phase métallique du catalyseur selon l'invention comprend au moins un métal noble, de préférence le platine, et au moins un promoteur choisi dans la liste définie par le rhénium et l'iridium. De préférence, le promoteur est au moins le rhénium. Le catalyseur comprend généralement au moins un dopant, choisi dans le groupe formé par le gallium, le germanium, l'indium, l'étain, l'antimoine, le thallium, le plomb, le bismuth, le titane, le chrome, le manganèse, le molybdène, le tungstène, le rhodium, le zinc et le phosphore. De préférence, le ou les dopants sont choisis dans le groupe formé par le gallium, le germanium, l'indium, l'étain, le bismuth et le phosphore.

Le catalyseur comprend généralement un halogène choisi dans le groupe formé par le chlore, le fluor, le brome et l'iode. De préférence, l'halogène est le chlore.

La teneur en métal noble dans le catalyseur selon l'invention se situe entre 0,02 à 2% poids, de préférence entre 0,05 et 1,5% poids, de manière encore plus préférée entre 0,1 et 0,8% poids. La teneur en chaque promoteur, rhénium ou iridium, dans le catalyseur selon l'invention se situe entre 0,02 à 10% poids, de préférence entre 0,05 et 2% poids, de manière encore plus préférée entre 0,1 et 1% poids. La teneur en chaque élément dopant se situe entre 0 et 2% poids, de préférence entre 0 et 1% poids, de manière encore plus préférée entre 0 et 0,7% poids. La teneur en halogène se situe entre 0,1 et 15% poids, de préférence entre 0,1 et 10% poids, de manière encore plus préférée entre 0,1 et 5% poids. De manière très préférée l'halogène est le chlore, et dans ce cas le catalyseur selon l'invention contient dé manière très préférée entre 0,5 et 2% poids de chlore.

Le catalyseur dans le lit se présente sous forme de particules qui peuvent être des billes, des extrudés, éventuellement polylobes, des pastilles ou toute autre forme communément utilisée. De préférence, le catalyseur se présente sous forme d'extrudés.

Selon l'invention, le catalyseur décrit précédemment est mis en oeuvre dans les procédés de reformage des essences et de production d'aromatiques utilisant de préférence des lits fixes.

La charge typique traitée comprend des hydrocarbures paraffiniques, naphténiques et aromatiques contenant de 5 à 12 atomes de carbone par molécule. Cette charge est définie, entre autres, par sa densité et sa composition pondérale. Cette charge est mise en contact avec le catalyseur selon la présente invention à une température comprise entre 300 et 700°C, de préférence entre 350 et 550°C. Le débit massique de charge traitée par unité de masse du catalyseur peut varier entre 0,1 et 10 kg/(kg.h), de préférence entre 0,5 et 6 kg/(kg.h). La pression opératoire peut être fixée entre la pression atmosphérique et 4 MPa, de préférence entre 1 MPa et 3 MPa. Une partie de l'hydrogène produit est recyclé pour atteindre un rapport molaire hydrogène recyclé sur charge hydrocarbonée compris entre 0,1 et 10, de préférence entre 1 et 8.

Les exemples suivants illustrent l'invention sans en limiter la portée.

### EXEMPLES

### exemple 1 (non conforme): préparation du catalyseur A

Le support est une alumine gamma de surface spécifique 215 m² par gramme qui contient moins de 20 ppm poids de soufre élémentaire (limite de détection par fluorescence X) et moins de 20 ppm poids de sodium (limite de détection par absorption atomique).

100 g de support sont mis en contact avec 500 cm³ d'une solution aqueuse d'acide chlorhydrique et d'acide hexachloroplatinique comprenant 0,30 g de platine. La quantité d'acide chlorhydrique est ajustée afin d'avoir une teneur en chlore proche de 1 % poids dans le catalyseur final. La solution d'imprégnation est alors soutirée.

300 cm³ d'une solution aqueuse comprenant 0,86 g de rhénium introduit sous forme de perrhénate d'ammonium, sont mis en contact avec le support comprenant du platine obtenu à l'issue de l'étape précédente pendant 3 heures.

Le catalyseur ainsi obtenu est séché 1 heure à 120°C, calciné pendant 2 heures à 500 °C, réduit sous hydrogène 2 heures à 520°C.

Le catalyseur est alors sulfuré avec un mélange hydrogène/H₂S (2660 ppm poids d'H₂S) pendant 7 minutes à 500°C (débit: 220 cm³/min en conditions NTP).

Le catalyseur final contient 0,29 % poids de platine, 0,42% poids de rhénium, 1,05% poids de chlore et 1620 ppm poids de soufre.

### exemple 2 (conforme):préparation du catalyser B

Le support est une alumine gamma de surface spécifique 206 m² par gramme obtenue par ajout simultané d'une solution de sulfate d'aluminium à une solution d'aluminate de sodium à pH 9. La bouillie est ensuite maintenue à pH=9 pendant les 3 heures de vieillissement. Elle est ensuite filtrée, puis lavée, atomisée, extrudée, séchée à 100°C et calcinée à 720°C. Le lavage avant extrusion est mené de telle sorte que le support contienne après calcination 1690 ppm poids de soufre et 504 ppm poids de sodium.

100 g de ce support sont mis en contact avec 500 cm³ d'une solution aqueuse d'acide chlorhydrique et d'acide hexachloroplatinique comprenant 0,30 g de platine. La quantité d'acide chlorhydrique est ajustée afin d'avoir une teneur en chlore proche de 1 % poids dans le catalyseur final. La solution d'imprégnation est alors soutirée.

300 cm³ d'une solution aqueuse comprenant 0,86 g de rhénium introduit sous forme de perrhénate d'ammonium, sont mis en contact avec le support comprenant du platine obtenu à l'issue de l'étape précédente pendant 3 heures.

Le catalyseur ainsi obtenu est séché 1 heure à 120°C, calciné pendant 2 heures à 500 °C, réduit sous hydrogène 2 heures à 520°C.

Le catalyseur final contient 0,29 % poids de platine, 0,43% poids de rhénium, 1,08%poids de chlore, 1650 ppm poids de soufre et 24 ppm poids de sodium.

### exemple 3 (non conforme): préparation du catalyseur C

Le support est une alumine gamma de surface spécifique 195 m² par gramme obtenue par ajout simultané d'une solution de sulfate d'aluminium à une solution d'aluminate de sodium à pH 9. La bouillie est ensuite maintenue à pH=9 pendant les 3 heures de vieillissement. Elle est ensuite filtrée, puis lavée, atomisée, extrudée, séchée à 100°C et calcinée à 740°C. Le lavage est contrôlé de tel façon à ce que le support contienne 1260 ppm poids de soufre et 504 ppm poids de sodium.
20 g de support sont mis en contact avec 100 cm³ d'une solution aqueuse d'acide chlorhydrique et d'acide hexachloroplatinique comprenant 0,06 g de platine. La quantité d'acide chlorhydrique est ajustée afin d'avoir une teneur en chlore proche de 1 % poids dans le catalyseur final. La solution d'imprégnation est alors soutirée.
60 cm³ d'une solution aqueuse comprenant 0,17 g de rhénium introduit sous forme de perrhénate d'ammonium, sont mis en contact avec le support comprenant du platine obtenu à l'issue de l'étape précédente pendant 3 heures.

Le catalyseur ainsi obtenu est séché 1 heure à 120°C, calciné pendant 2 heures à 500 °C puis réduit sous hydrogène 2h à 500°C.

Le catalyseur final contient 0,28 % poids de platine, 0,41% poids de rhénium, 0,96 % poids de chlore, 1250 ppm poids de soufre et 22 ppm poids de sodium.

### exemple 4 (non conforme): préparation du catalyseur D

Le support est une alumine gamma de surface spécifique 222 m² par gramme obtenue par ajout simultané d'une solution de sulfate d'aluminium à une solution d'aluminate de sodium à pH 9. La bouillie est ensuite maintenue à pH=9 pendant les 3 heures de vieillissement. Elle est ensuite filtrée, puis lavée, atomisée, extrudée, séchée à 100°C et calcinée à 690°C. Le lavage est contrôlé de tel façon à ce que ce support contienne 3490 ppm poids de soufre et 611 ppm poids de sodium.
20 g de support sont mis en contact avec 100 cm³ d'une solution aqueuse d'acide chlorhydrique et d'acide hexachloroplatinique comprenant 0,06 g de platine. La quantité d'acide chlorhydrique est ajustée afin d'avoir une teneur en chlore proche de 1 % poids dans le catalyseur final. La solution d'imprégnation est alors soutirée.
60 cm³ d'une solution aqueuse comprenant 0,17 g de rhénium introduit sous forme de perrhénate d'ammonium, sont mis en contact avec le support comprenant du platine obtenu à l'issue de l'étape précédente pendant 3 heures.

Le catalyseur ainsi obtenu est séché 1 heure à 120°C, calciné pendant 2 heures à 500 °C puis réduit sous hydrogène 2h à 500°C.

Le catalyseur final contient 0,30 % poids de platine, 0,42% poids de rhénium, 1,12 % poids de chlore, 3460 ppm poids de soufre et 28 ppm poids de sodium.

### exemple 5: tests catalytiques

Les catalyseurs A, B, C et D sont testés pour la transformation d'une charge hydrocarbonée de type naphtha issue de la distillation de pétrole, dont les caractéristiques sont les suivantes :

| | | |
|---|---|---|
| densité à 15°C | 0,759 | kg/dm³ |
| poids moléculaire moyen | 119 | g |
| paraffines / naphtènes / aromatiques | 53/31/16 | % poids |

Cette transformation est réalisée dans une unité de test pilote en lit traversé en présence d'hydrogène. Avant injection de la charge, les catalyseurs sont activés à haute température sous hydrogène pendant 2 heures. Le test est conduit en utilisant les conditions opératoires suivantes :
pression totale : 1,5 MPa
débit de charge : 2 kg par kg de catalyseur par heure
indice d'octane recherche : 98
rapport molaire hydrogène recyclé sur charge hydrocarbonée : 2,5.
Les performances obtenues après 40 h de fonctionnement sont reportées dans le tableau 1, à savoir la température nécessaire pour atteindre l'indice d'octane recherche visé, représentatif de l'activité du catalyseur, et les rendements pondéraux en reformat C₅⁺ (hydrocarbures contenant au moins 5 atomes de carbone) et C₄⁻ (hydrocarbures contenant de 1 à 4 atomes de carbone), représentatifs de la sélectivité du catalyseur.

**Tableau 1**

| Échantillon | température (°C) | rendement C₅⁺ (% poids) | rendement C₄⁻ (% poids) |
|---|---|---|---|
| A | 490 | 87,3 | 9,9 |
| B | 478 | 87,8 | 9,4 |
| C | 483 | 86,2 | 11,1 |
| D | 495 | 87,1 | 10,1 |

Les deux catalyseurs A et B ont la même teneur en soufre. Une amélioration des performances en terme d'activité du catalyseur B (conforme à l'invention) est constaté par rapport aux performances du catalyseur A (non conforme à l'invention du point de vue de la préparation du catalyseur). De plus, l'introduction du soufre dans le support permet d'éviter l'étape de sulfuration finale du catalyseur.

Les performances des catalyseurs C et D obtenues après 40 h de fonctionnement sont également reportées dans le tableau 1. Le catalyseur C présentant une teneur en soufre plus faible que la gamme de teneurs revendiquée est moins sélectif que le catalyseur B selon l'invention. Le catalyseur D présentant une teneur en soufre plus élevée que la gamme de teneurs revendiquée dans le présent brevet est moins actif que le catalyseur B selon l'invention.

## Revendications

1. Procédé de préparation d'un catalyseur comprenant au moins un métal du groupe VIII, du rhénium ou de l'iridium et un support soufré, ledit catalyseur présentant à l'issue de l'étape d) une teneur en sodium strictement inférieure à 50 ppm poids et une teneur en soufre comprise entre 1500 et 3000 ppm poids, ledit procédé comprenant les étapes suivantes:
- une étape a) de préparation du support soufré comprenant les sous-étapes suivantes:
a1) ajout simultané d'une solution aqueuse de sulfate d'aluminium à une solution aqueuse basique d'aluminate de sodium de manière à précipiter le précurseur de l'alumine et former une bouillie, le pH étant maintenu entre 6 et 10, la vitesse d'addition des deux solutions est maintenue pour former un précurseur d'alumine intermédiaire sous forme de boehmite-pseudoboehmite
a2/ vieillissement de la bouillie obtenue à l'issue de l'étape a1) à des températures comprises entre 60 et 250°C, pendant une durée allant de 0 à 24 heures, le pH pendant cette étape étant ajusté entre 8,5 et 10,
a3/ filtration de la bouillie obtenue à l'issue de l'étape a2) pour obtenir un gâteau de filtration qui est lavé jusqu'à obtenir une teneur en poids de soufre comprise entre 1500 et 3000 ppm rapportée à l'alumine calcinée,
a4/ séchage entre 40 et 150°C du gâteau de filtration obtenu à l'issue de a3/a5/ mise en forme du gâteau séché obtenu à l'issu de l'étape a4/ de manière à obtenir le support soufré puis calcination entre 500°C et 830°C,
- une étape b) de mise en contact du support soufré obtenu à l'issu de l'étape a) ou de l'étape c) avec une solution aqueuse ou organique d'au moins un précurseur de métal du groupe VIII,
- une étape c) de mise en contact du support obtenu à l'issue de l'étape b) ou de l'étape a) avec une solution aqueuse ou organique d'au moins un précurseur du rhénium ou de l'iridium
- une étape d) de séchage du support obtenu à l'issue de l'étape c) à une température comprise entre 80 et 150°C, puis de calcination sous air à une température comprise entre 300 et 600°C, puis de réduction sous hydrogène.

2. Procédé de préparation d'un catalyseur selon la revendication 1 dans lequel le métal du groupe VIII est le platine.

3. Procédé de préparation d'un catalyseur selon la revendication 2 dans lequel le précurseur du platine est l'acide hexachloroplatinique.

4. Procédé de préparation d'un catalyseur selon l'une des revendications 1 à 3 dans lequel le catalyseur comprend du rhénium.

5. Procédé de préparation d'un catalyseur selon la revendication 4 dans lequel le précurseur du rhénium est du perrhénate d'ammonium.

6. Procédé de préparation d'un catalyseur selon l'une des revendications 1 à 5 dans lequel la sous étape a5/ de séchage du gâteau de filtration obtenu à l'issue de a4/ est effectuée entre 70°C et 120°C et la calcination est effectuée entre 550°C et 750°C.

7. Procédé de préparation d'un catalyseur selon l'une des revendications 1 à 6 présentant à l'issue de l'étape d) une teneur en sodium strictement inférieure à 40 ppm poids.

8. Procédé de préparation d'un catalyseur selon l'une des revendications 1 à 7 présentant à l'issue de l'étape d) une teneur en soufre comprise entre 1550 et 2900 ppm poids.

9. Procédé de préparation d'un catalyseur selon l'une des revendications 1 à 8 comprenant en outre une étape de mise en contact du support soufré obtenu à l'issue de l'étape a), b) ou c) avec une solution aqueuse ou organique d'au moins un précurseur d'un ou de dopants sélectionné dans le groupe constitué par le gallium, le germanium, l'indium, l'étain, l'antimoine, le thallium, le plomb, le bismuth, le titane, le chrome, le manganèse, le molybdène, le tungstène, le rhodium, le zinc et le phosphore.

10. Procédé de préparation d'un catalyseur selon l'une des revendications 1 à 8 comprenant l'introduction d'au moins un dopant sélectionné dans le groupe constitué par le gallium, le germanium, l'indium, l'étain, l'antimoine, le thallium, le plomb, le bismuth, le titane, le chrome, le manganèse, le molybdène, le tungstène, le rhodium, le zinc et le phosphore lors de l'étape a1) ou lors de l'étape a5.

## Claims

1. A process for preparing a catalyst comprising at least one metal from group VIII, rhenium or iridium and a sulphur-containing support, said catalyst having, at the end of step d), a sodium content which is strictly less than 50 ppm by weight and a sulphur content in the range 1500 to 3000 ppm by weight, said process comprising the following steps:
- a step a) for preparing a sulphur-containing support, comprising the following sub-steps:
a1) simultaneously adding an aqueous solution of aluminium sulphate to a basic aqueous solution of sodium aluminate in order to precipitate the alumina precursor and to form a slurry, the pH being maintained between 6 and 10, the rate of addition of the two solutions being maintained in order to form an intermediate alumina precursor in the form of boehmite-pseudobochmite;
a2) maturing the slurry obtained at the end of step a1) at temperatures in the range 60°C to 250°C for a period of 0 to 24 h, the pH during said step being adjusted to between 8.5 and 10;
a3) filtering the slurry obtained at the end of step a2) to obtain a filtration cake which is washed until the sulphur content is in the range 1500 to 3000 ppm by weight with respect to the calcined alumina;
a4) drying the filtration cake obtained at the end of step a3) between 40°C and 150°C;
a5) forming the dry cake obtained at the end of step a4) in order to obtain the sulphur-containing support then calcining between 500°C and 830°C;
- a step b) for bringing the sulphur-containing support obtained at the end of step a) or step c) into contact with an aqueous or organic solution of at least one precursor of the metal from group VIII;
- a step c) for bringing the support obtained at the end of step b) or
step a) into contact with an aqueous or organic solution of at least one precursor of rhenium or iridium;
- a step d) for drying the support obtained at the end of step c) at a temperature in the range 80°C to 150°C, then calcining in air at a temperature in the range 300°C to 600°C, then reducing in hydrogen.

2. A process for preparing a catalyst according to claim 1, in which the group VIII metal is platinum.

3. A process for preparing a catalyst according to claim 2, in which the platinum precursor is hcxachloroplatinic acid.

4. A process for preparing a catalyst according to one of claims I to 3, in which the catalyst comprises rhenium.

5. A process for preparing a catalyst according to claim 4, in which the rhenium precursor is ammonium perrhenate.

6. A process for preparing a catalyst according to one of claims 1 to 5, in which the sub-step a5) for drying the filtration cake obtained at the end of step a4) is carried out between 70°C and 120°C and calcining is carried out between 550°C and 750°C.

7. A process for preparing a catalyst according to one of claims 1 to 6 having, at the end of step d), a sodium content which is strictly less than 40 ppm by weight.

8. A process for preparing a catalyst according to one of claims 1 to 7 having, at the end of step d), a sulphur content in the range 1550 to 2900 ppm by weight.

9. A process for preparing a catalyst according to one or claims 1 to 8, further comprising a step for bringing the sulphur-containing support obtained at the end of step a), b) or c) into contact with an aqueous or organic solution of at least one precursor of a dopant or dopants selected from the group constituted by gallium, germanium, indium, tin, antimony, thallium, lead, bismuth, titanium, chromium, manganese, molybdenum, tungsten, rhodium, zinc and phosphorus.

10. A process for preparing a catalyst according to one of claims 1 to 8, comprising introducing at least one dopant selected from the group constituted by gallium, germanium, indium, tin, antimony, thallium, lead, bismuth, titanium, chromium, manganese, molybdenum, tungsten, rhodium, zinc and phosphorus during step a1) or during step a5).

## Patentansprüche

1. Verfahren zur Herstellung eines Katalysators, umfassend mindestens ein Metall der Gruppe VIII, Rhenium oder Iridium und einen schwefelhaltigen Träger, wobei der Katalysator am Ende von Schritt d) einen Natriumgehalt, der exakt unter 50 Gew.-ppm liegt und einen Schwefelgehalt im Bereich zwischen 1.500 und 3.000 Gew.-ppm aufweist, wobei das Verfahren die folgenden Schritte umfasst:
- einen Schritt a) zur Herstellung des schwefelhaltigen Trägers, umfassend die folgenden Unterschritte:
a1) gleichzeitiges Zugeben einer wässrigen Aluminiumsulfatlösung zu einer basischen wässrigen Natriumaluminatlösung, um den Aluminiumoxidvorläufer auszufällen und eine Aufschlämmung zu bilden, wobei der pH-Wert zwischen 6 und 10 gehalten wird, die Zugabegeschwindigkeit der beiden Lösungen aufrecht erhalten wird, um ein Aluminiumoxidvorläufer-Zwischenprodukt in Form von Böhmit-Pseudoböhmit zu bilden,
a2) Reifen der am Ende von Schritt a1) erhaltenen Aufschlämmung bei Temperaturen im Bereich zwischen 60 und 250 °C für eine Dauer im Bereich von 0 bis 24 Stunden, wobei der pH-Wert in diesem Schritt zwischen 8,5 und 10 eingestellt wird,
a3) Filtrieren der am Ende von Schritt a2) erhaltenen Aufschlämmung, um einen Filterkuchen zu erhalten, der gewaschen wird, bis ein Schwefelgehalt im Bereich zwischen 1.500 und 3.000 Gew.-ppm, bezogen auf das kalzinierte Aluminiumoxid, erhalten wird,
a4) Trocknen des am Ende von a3) erhaltenen Filterkuchens zwischen 40 et 150 °C,
a5) Formen des am Ende von Schritt a4) erhaltenen getrockneten Kuchens, um den schwefelhaltigen Träger zu erhalten, dann Kalzinieren zwischen 500 °C und 830 °C,
- einen Schritt b) zum Inkontaktbringen des am Ende von Schritt a) oder Schritt c) erhaltenen schwefelhaltigen Trägers mit einer wässrigen oder organischen Lösung aus mindestens einem Metallvorläufer der Gruppe VIII,
- einen Schritt c) zum Inkontaktbringen des am Ende von Schritt b) oder Schritt a) erhaltenen Trägers mit einer wässrigen oder organischen Lösung aus mindestens einem Vorläufer von Rhenium oder Iridium,
- einen Schritt d) zum Trocknen des am Ende von Schritt c) erhaltenen Trägers bei einer Temperatur im Bereich zwischen 80 und 150 °C, dann Kalzinieren unter Luft bei einer Temperatur im Bereich zwischen 300 und 600 °C, dann Reduzieren unter Wasserstoff.

2. Verfahren zur Herstellung eines Katalysators nach Anspruch 1, wobei das Metall der Gruppe VIII Platin ist.

3. Verfahren zur Herstellung eines Katalysators nach Anspruch 2, wobei der Vorläufer des Platins Hexachloroplatinsäure ist.

4. Verfahren zur Herstellung eines Katalysators nach einem der Ansprüche 1 bis 3, wobei der Katalysator Rhenium umfasst.

5. Verfahren zur Herstellung eines Katalysators nach Anspruch 4, wobei der Vorläufer des Rheniums Ammoniumperrhenat ist.

6. Verfahren zur Herstellung eines Katalysators nach einem der Ansprüche 1 bis 5, wobei der Unterschritt a5) zum Trocknen des am Ende von Schritt a4) erhaltenen Filterkuchens zwischen 70 °C und 120 °C durchgeführt wird und das Kalzinieren zwischen 550 °C und 750 °C durchgeführt wird.

7. Verfahren zur Herstellung eines Katalysators nach einem der Ansprüche 1 bis 6, der am Ende von Schritt d) einen Natriumgehalt von exakt weniger als 40 Gew.-ppm aufweist.

8. Verfahren zur Herstellung eines Katalysators nach einem der Ansprüche 1 bis 7, der am Ende von Schritt d) einen Schwefelgehalt im Bereich zwischen 1.550 und 2.900 Gew.-ppm aufweist.

9. Verfahren zur Herstellung eines Katalysators nach einem der Ansprüche 1 bis 8, umfassend ferner einen Schritt zum Inkontaktbringen des am Ende von Schritt a), b) oder c) erhaltenen schwefelhaltigen Trägers mit einer wässrigen oder organischen Lösung aus mindestens einem Vorläufer eines oder der Dotierungsmittel, ausgewählt aus der Gruppe bestehend aus Gallium, Germanium, Indium, Zinn, Antimon, Thallium, Blei, Wismut, Titan, Chrom, Mangan, Molybdän, Wolfram, Rhodium, Zink und Phosphor.

10. Verfahren zur Herstellung eines Katalysators nach einem der Ansprüche 1 bis 8, umfassend das Einführen mindestens eines Dotierungsmittels, ausgewählt aus der Gruppe bestehend aus Gallium, Germanium, Indium, Zinn, Antimon, Thallium, Blei, Wismut, Titan, Chrom, Mangan, Molybdän, Wolfram, Rhodium, Zink und Phosphor im Verlauf von Schritt a1) oder im Verlauf von Schritt a5).
